Europäisches Patentamt

European Patent Office

Office européen des brevets

(11) Veröffentlichungsnummer: **0 030 400**
A1

# (12) EUROPÄISCHE PATENTANMELDUNG

(21) Anmeldenummer: 80201073.6

(51) Int. Cl.³: **B 03 C 3/82**

(22) Anmeldetag: 11.11.80

(30) Priorität: 07.12.79 NL 7908837

(71) Anmelder: **den Dekker, Dirk Jan Marinus, Grootland 9, Bergen (NL)**

(43) Veröffentlichungstag der Anmeldung: 17.06.81
Patentblatt 81/24

(72) Erfinder: **den Dekker, Dirk Jan Marinus, Grootland 9, Bergen (NL)**

(84) Benannte Vertragsstaaten: **AT BE CH DE FR GB IT LI LU SE**

(74) Vertreter: **Koomen, Jan, Ir., Kennemerstraatweg 35, NL-1814 GB Alkmaar (NL)**

(54) **Luftreiniger.**

(57) Elektro-statische Luftreinigungsvorrichtung, gebildet durch ein Gehäuse mit einer Ansaugeöffnung und einer Ausblaseöffnung (3) mit, dazwischen geschaltet, einem Gebläse (2) und einem elektro-statischen Staubfänger, wobei das Gehäuse zusammengesetzt ist aus einem Gebläsegehäuse (1) das bestimmt ist um auf eine Unterstützung, wie eine Decke, angebracht zu werden, und einem losnehmbar und/oder wegschwenkbar darauf angeschlossenen Staubfängergehäuse (4, 5).

Dirk-Jan Marinus den Dekker in Bergen (N-H).

Luftreinigungsvorrichtung

Die Erfindung betrifft eine electro-statische Luftreinigungsvorrichtung, gebildet durch ein Gehäuse mit wenigstens einer Anzaugeöffnung und wenigstens einer Ausblaseöffnung, und in dem ein Gebläse ist angeordnet mit wenigstens einem, davor angeordneten electro-statischen Staubfänger, derart, dass beim Betrieb die zu reinigende Luft durch das Gebläse durch den Staubfänger hindurch angezaugt wird um darauf wieder durch die Ausblaseöffnung abgeführt zu werden.

Eine derartige Luftreinigungsvorrichtung ist bekannt, und wobei das Gehäuse an die Decke angebracht werden muss.

Beim Betrieb werden die Staubteilchen der angesaugten und zu reinigenden Luft durch die electrische Ladung des vor dem Gebläse angeordneten electro-statischen Elementes angezogen und setzen diese Staubteilchen sich auf dieses Element ab. Durch diese Absetzung von Staubteilchen muss das electro-statischen Element von Zeit zu Zeit gereinigt werden und wozu es aus das Gehäuse der Luftreinigungsvorrichtung ausgenommen werden muss.
Bei der bekannten Luftreinigungsvorrichtung kann dazu das Element in und aus das Gehäuse geschoben werden, was eine ziemlich umständliche Arbeit ist weil die an der Decke abgebrachte Luftreinigungsvorrichtung im Regel nicht ohne weiteres erreichbar ist.

Die Erfindung beabsichtigt diese Beschwerde der bekannten Luftreinigungsvorrichtung zu beseitigen, mehr ins-besondere durch die Erreichbarkeit und Austauschbarkeit des electro-statischen Elementes zu verbessern.

- 2 -

0030400

Die Luftreinigungsvorrichtung nach der Erfindung zeigt dazu das Merkmal, dass das Gehäuse ist aufgebaut aus einem Gebläsegehäuse, dass versehen ist mit der Ausblaseöffnung und bestimmt ist um fest auf eine Unterstützung, wie eine Decke angebracht zu werden, und einer losnehmbaren darauf angeschlossenen und/oder wenigstens zum teil davon wegschwenkbaren Staubfängergehäuse, das versehen ist mit der Ansaugeöffnung.

Zum Auswechseln oder Reinigen des electro-statischen Elementes kann dieses mit dem zugehörigen Gehäuse von dem obenangeordneten Gebläsegehäuse losgekuppelt werden und nach unten weggeschwenkt werden, und worauf in einfacher Weise das Element aus dem Staubfängergehäuse ausgenommen und ersetzt durch ein gereinigtes Element werden kann.

Das Staubfängergehäuse kann in unterschiedlichen Weisen ausgeführt sein und an das Gebläsegehäuse angebracht sein. So könnte das Staubfängergehäuse aus einem Stück bestehen und das entlang einen Seitenrand eines rechteckigen Anschlusses auf dem Gebläsegehäuse lenkbar damit verbunden ist. Beim vonab dem Gebläsegehäuse nach unten Schwenken des Staubfängergehäuses, kommt das electro-statische Element vonab dem hauptsächlich wagerechten Betriebstand in einen mehr senkrechten Austauschstand und kann dann sehr einfach aus das abhängende Staubfängergehäuse ausgenommen und ausgetauscht oder gereinigt werden.

Bei einer sehr zweckmässigen Ausführungsform der erfundenen Luftreinigungsvorrichtung, ist das Staubfängergehäuse zusammengesetzt aus einem erste Teil, dass bestimmt ist zum Aufnehmen des electro-statischen Elementes, und einem lenkbar damit verbundenen zweiten Teil, dass die Speisekontakte für das Element enthält, derart, dass beim von dem Gebläsegehäuse wegschwenken des erste Teiles, das Element von dem Speisekontakte freikommt und ohne weiteres aus das Gehäuse ausgenommen werden kann.

- 3 -

0030400

Unter normalen Umständen kann das zweite Teil des Staubfängergehäuses, und dass die electrische Speiseleitungen
und-kontakte enthält, immer angeschlossen sein auf dem
Gebläsegehäuse und möglicherweise sogar fest damit verbunden
sein.

Für eineneinfachenAufbau der erfundenen Luftreinigungsvorrichtung
sind das erste und das zweite Teil des Staubfängergehäuses
nach einem weiteren Merkmal der erfundenen Luftreinigungsvorrichtung, oberhalb der lenkbaren Verbindung an dem
Gebläsegehäuse befestigt, mehr ins-besondere aufgehängt,
und können die von der lenkbaren Verbindung abgewandten
Längsränder der beiden Staubfängergehäuse-teile . abdichtend
gegen die zusammenarbeitenden Längsränder des Gebläsegehäuses
geklemmt werden.

Bei dieser Ausführungsform der erfundenen Luftreinigungsvorrichtung
kann das Staubfängergehäuse oberhalb der lenkbaren Verbindung
mittels mehr ins-besondere Haken, an das Gebläsegehäuse
aufgehängt werden, und worauf die beiden Teile zu in einen
abdichtenden Anschluss mit dem Gebläsegehäuse hochgeschwenkt werden,
und darauf in diesem Betriebstand auf dem Gebläsegehäuse
festgesetzt werden mit, mehr ins besondere Klemmverbindungsorganen.

Die Erfindung wird im folgenden erläutert an Hand der Zeichnung
eines Ausführungsbeispiel.

Fig. 1 ist eine Seitenansicht der Luftreinigungsvorrichtung
nach der Erfindung im geschlossenen Betriebstand.
Fig. 2 ist eine Seitenansicht der Luftreinigungsvorrichtung
nach fig. 1 und wobei die beidenTeile des Staubfängergehäuses
von dem Gebläsegehäuse weggeschwenkt worden sind.
Fig. 3 ist eine perspektivische Ansicht der Luftreinigungsvorrichtung in geöffnetem Austauschstand.

Wie aus der Zeichnung ersichlich ist, wird die Luftreinigungsvorrichtung gebildet durch ein obenes, auf eine Decke

- .. -

au zu bringenden Gebläsegehäuse (1), mit einem Gebläse (2) und einer oder mehreren Ausblaseöffnungen (3).

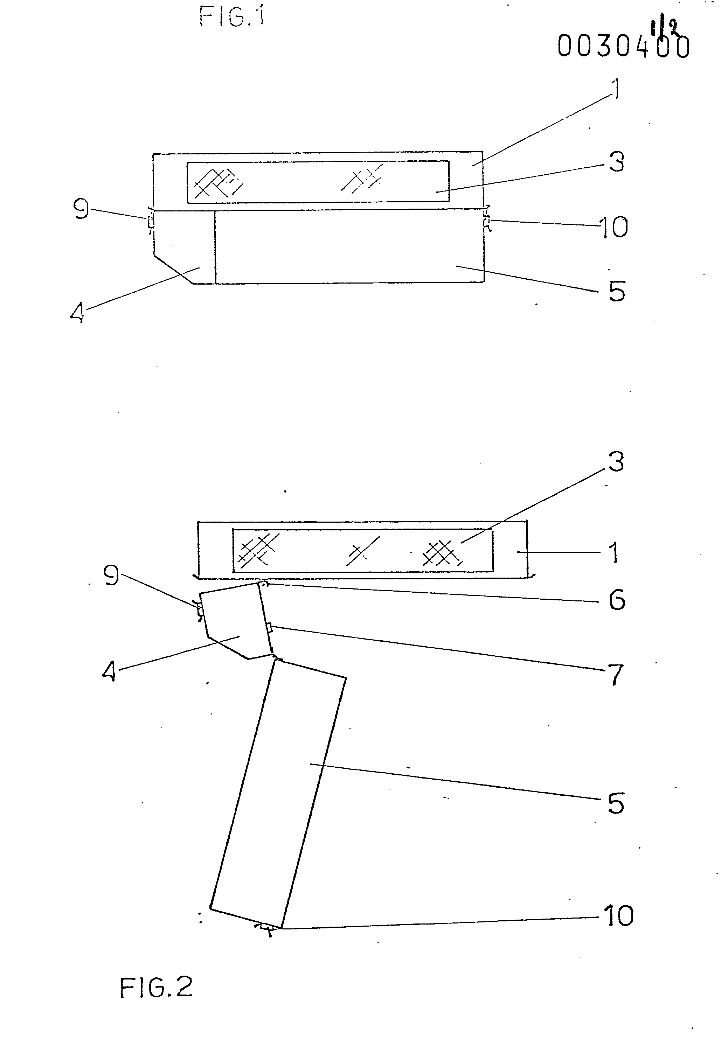

An das Gebläsegehäuse ist, wie in fig. 2 ist dargestellt, das Staubfängergehäuse (4,5) aufgehängt mittels der Haken (6) die angebracht sind an das, die Speiseleitungen und Speisekontakte (7) tragenden Teil (4) des Staubfängergehäuses (4,5).

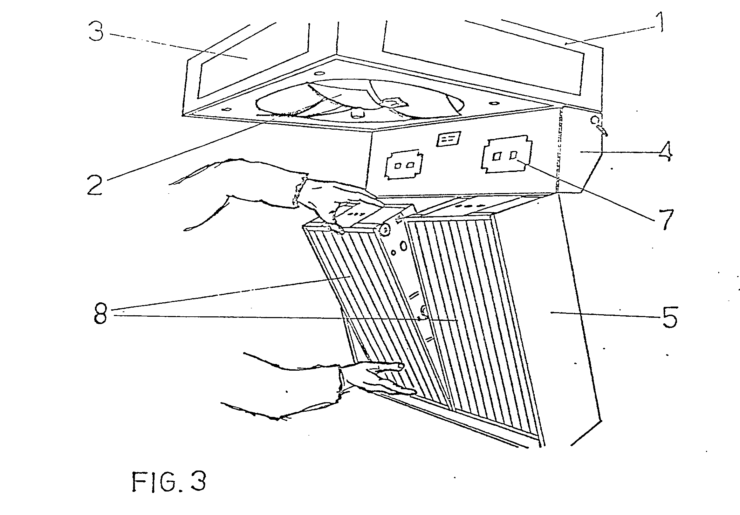

Lenkbar mit dem Teil (4) ist das Teil (5) des Staubfängergehäuses angebracht und dass, wie in fig. 3 ist dargestellt, zwei electro-statische Elemente (8) enthalten kann.

An der unteren Seite des Staubfängergehäuseteiles (5) befindet sich die nicht in die Zeichnung dargestellte Ansaugeöffnung, wodurch die zu reinigen Luft durch die Elemente (8) hindurch durch das Gebläse (2) angesaugt und darauf wieder durch die Ausblaseöffnungen (3) abgeführt werden kann. Für das in den Betriebstand bringen der Luftreinigungsvorrichtung, wird zunächst das Teil (4) von aus dem in Fig. 2 dargestellte Stand um die Haken (6) rechtsum nach oben gegen das Gebläsegehäuse (1) geschwenkt und mit den Klemmorganen (9) festgesetzt, und worauf das Teil (5) linksumdrehend, wie dies gesehen wird in fig. 2, nach oben und abdichtend gegen das Gebläsegehäuse geschwenkt und festgesetzt mit entsprechenden Klemmorganen (10) wird.

0030400

A N S P R Ü C H E

1. Electro-statische Luftreinigungsvorrichtung, gebildet durch ein Gehäuse mit wenigstens einer Ansaugeöffnung und wenigstens einer Ausblaseöffnung, und in dem ein Gebläse ist angebracht, mit davor wenigstens einem electro-statischen Staubfänger, derart, dass beim Betrieb, die zu reinigende Luft durch das Gebläse durch den Staubfänger hindurch angesaugt wird um darauf wieder durch die Ausblaseöffnung abgeführt zu werden, dadurch gekennzeichnet, dass das Gehäuse ist aufgebaut aus einem Gebläsegehäuse, dass versehen ist mit der Ausblaseöffnung und bestimmt ist um auf eine Unterstützung, wie eine Decke, angebracht zu werden, und einem losnehmbaren darauf angeschlossenen und/oder wenigstens zum Teile davon wegschwenkbaren Staubfängergehäuse, das versehen ist mit der Ansaugeöffnung.

2. Luftreinigungsvorrichtung nach Anspruch 1, dadurch gekennzeichnet, dass das Staubfängergehäuse gebildet wird durch ein erstes Teil dass bestimmt ist zum Aufnehmen des electro-statischen Elementes, und ein lenkbar damit verbundenes zweite Teil, dass die Speisekontakte für das Element enthält, derart, dass beim von dem Gebläsegehäuse Wegschwenken des ersten Teiles des Staubfängergehäuses, das electro-statische Element von den Speisekontakten freikommt und aus das Gehäuse ausgenommen werden kann.

3. Luftreinigungsvorrichtung nach Anspruch 1 oder 2, dadurch gekennzeichnet, dass das Staubfängergehäuse oberhalb der lenkbaren Verbindung zwischen dem ersten Teil und dem zweiten Teil ist befestigt, mehr ins besondere ist aufgehängt, an das Gebläsegehäuse.

4. Luftreinigungsvorrichtung nach Anspruch 2 oder 3, dadurch gekennzeichnet, dass das Staubfängergehäuse an den von der lenkbaren Verbindung abgewandten Endränder abdichtend verbunden ist oder verbunden werden kann mit dem Gebläsegehäuse, mehr ins besondere, mittels Klemmverbindungsorgane.

FIG.1

0030400

FIG.2

FIG.3

| Kategorie | Kennzeichnung des Dokuments mit Angabe, soweit erforderlich, der maßgeblichen Teile | betrifft Anspruch |
|---|---|---|
| | US - A - 4 140 498 (A. KRAUSE) <br> * Anspruch 1 * <br> -- | 1 |
| | US - A - 3 222 848 (L. KOBLE) <br> * Anspruch 1 * <br> -- | 1 |
| | AU - B - 470 598 (EMAIL LTD) <br> * Anspruch 1 * <br> -- | 1 |
| A | US - A - 3 747 301 (W. GLOVER et al.) <br> * Anspruch 1 * <br> ----- | |

**EINSCHLÄGIGE DOKUMENTE**

KLASSIFIKATION DER ANMELDUNG (Int Cl )

B 03 C 3/82

RECHERCHIERTE SACHGEBIETE (Int. Cl.)

B 03 C 3/00
        3/34
        3/82
F 24 F 3/16

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-03-1981 | VAN DEN BULCKE |

EPA form 1503.1   06.78